# EUROPÄISCHE PATENTSCHRIFT

(11) **EP 4 010 601 B1**
(45) Veröffentlichungstag und Bekanntmachung des Hinweises auf die Patenterteilung: **28.12.2022**
(21) Anmeldenummer: 20792518.1
(22) Anmeldetag: 07.10.2020
(51) Int. Cl.: F16C 7/06, F16M 11/28, F16B 2/24

(54) **VERRIEGELUNGSELEMENT ZUR LÖSBAREN VERRIEGELUNG EINER DREHBEWEGUNG EINES ADAPTERS RELATIV ZU EINEM KÖRPER EINER ZUG-DRUCK-STANGE SOWIE ZUG-DRUCK-STANGE MIT EINEM SOLCHEN VERRIEGELUNGSELEMENT**
LOCKING ELEMENT FOR RELEASABLY LOCKING A ROTATIONAL MOVEMENT OF AN ADAPTER RELATIVE TO A BODY OF A PUSH-PULL ROD, AND PUSH-PULL ROD COMPRISING SUCH A LOCKING ELEMENT
ÉLÉMENT DE VERROUILLAGE POUR VERROUILLER DE MANIÈRE LIBÉRABLE UN MOUVEMENT DE ROTATION D'UN ADAPTATEUR PAR RAPPORT À UN CORPS D'UNE TIGE DE TRACTION-COMPRESSION ET TIGE DE TRACTION-COMPRESSION POURVUE D'UN TEL ÉLÉMENT DE VERROUILLAGE

(30) Priorität: 07.10.2019 AT 5017619 U
(43) Veröffentlichungstag der Anmeldung: 15.06.2022
(73) Patentinhaber: FACC AG, 4910 Ried im Innkreis (AT)
(72) Erfinder: KLEMBARA, Lukas, 84106 Bratislava (SK); KAMMERER, Bernhard, 4755 Zell an der Pram (AT)
(74) Vertreter: SONN Patentanwälte OG
(86) Internationale Anmeldenummer: PCT/AT2020/060356
(87) Internationale Veröffentlichungsnummer: WO 2021/068016

(56) Entgegenhaltungen:
- DE-U1-202004 004 407
- DE-U1-202011 002 079
- US-A- 1 411 279
- US-A- 2 845 288
- US-A1- 2012 224 913

## Beschreibung

Die Erfindung betrifft ein Verriegelungselement zur lösbaren Verriegelung der Drehbewegung eines Adapters relativ zu einem Körper einer Zug-Druck-Stange, mit einem Hebelarm und einem mit dem Hebelarm verbunden Bolzen, einem Schnappelement und einer Rasteinrichtung.

Weiters betrifft die Erfindung eine Zug-Druck-Stange mit einem solchen Verriegelungselement, einem Adapter und einem Körper.

Zug-Druck-Stangen werden bspw. in der Luftfahrt angewendet. Diese umfassen üblicherweise einen Körper, der für gewöhnlich einen rohrförmigen Abschnitt aufweist, und einen Adapter an zumindest einem Ende des Körpers bzw. teilweise aufgenommen in den Körper von einem Ende des Körpers aus. Über den bzw. die Adapter kann die Zug-Druck-Stange montiert werden. Zug-Druck-Stangen sind üblicherweise in der Länge verstellbar, um eine Anpassung an einen vorgegebenen Abstand von Montagepunkten oder einen Toleranzausgleich vornehmen zu können. Dabei sind der Adapter und der Körper gegeneinander verdrehbar und weisen jeweils ein Gewinde auf. Es kann bspw. ein Gewinde auf einem Abschnitt des Innenmantels des Körpers und auf einem Abschnitt des Außenmantels des Adapters vorgesehen sein. Somit kann durch eine Drehbewegung des Adapters relativ zum Körper die Länge der Zug-Druck-Stange verändert werden.

Zur lösbaren Verriegelung der Drehbewegung des Adapters relativ zum Körper ist für gewöhnlich ein entsprechendes Verriegelungselement vorgesehen. Dieses weist einerseits einen Bolzen auf, der in Ösen des Adapters eingeführt werden kann. Weiters weist das Verriegelungselement üblicherweise ein Schnappelement zum Einschnappen auf einer bzw. um eine Mantelfläche des Körpers und eine Rasteinrichtung zum Zusammenwirken mit einem Gegenelement auf dem Körper und somit zur lösbaren Verriegelung (Arretierung) der Drehbewegung des Adapters relativ zum Körper. Zuerst wird der Bolzen in die Ösen des Adapters eingeführt und anschließend wird das Verriegelungselement so geklappt, dass das Schnappelement auf dem Gegenelement am Körper einschnappt. Eine solche Zug-Druck-Stange ist bspw. in der DE 20 2004 016 321 U1 beschrieben.

Der Einbau bzw. die Montage einer Zug-Druck-Stange muss häufig unter beengten Raumverhältnissen und mit eingeschränkter Zugänglichkeit erfolgen, bspw. bei der Montage von Überkopfgepäckfächern in Flugzeugen. Hier kann es vorkommen, dass überhaupt nur eine akzeptable Zugänglichkeit von der Richtung, von der der Bolzen in den Adapter der Zug-Druck-Stange eingeschoben wird (bspw. im Flugzeug in Längsrichtung des Flugzeugs von vorne nach hinten), und von einer zweiten Richtung besteht. Die Ausrichtung der zweiten Richtung könnte bspw. bedingen, dass die das Verriegelungselement nach dem Einführen des Bolzens in den Adapter nur von unten nach oben geklappt werden kann, da keine Zugänglichkeit von oben vorliegt. Somit könnte ein Adapter, wie in der DE 20 2004 016 321 U1 allerdings nur auf einer Seite des Flugzeugs in dieser Weise und somit praktikabel montiert werden; auf der zweiten Seite wäre dies nicht möglich, da hier spiegelverkehrte Verhältnisse vorlägen.

Weitere Zug-Druck-Stangen sind in der DE 20 2011 002079 U, das die Merkmale des Oberbegriffs von Anspruch 1 offenbart, und der US 1 411 279 A beschrieben.

Es ist somit eine Aufgabe der Erfindung, ein Verriegelungselement für eine Zug-Druck-Stange der oben angegebenen Art sowie eine Zug-Druck-Stange mit einem solchen Verriegelungselement zu schaffen, die auch bei eingeschränkter Zugänglichkeit eine einfache Montage zulassen. Vorteilhafterweise soll das Verriegelungselement bzw. die damit ausgerüstete Zug-Druck-Stange unter den beiden Varianten von spiegelbildlich eingeschränkten Platzverhältnissen einfach bedient, d.h. geöffnet und geschlossen werden können, und es sollen hierfür nicht zwei unterschiedliche Arten von Verriegelungselementen oder Zug-Druck-Stangen notwendig sein. Weiters vorteilhafterweise sollte dieses eine verlässliche lösbare Verriegelung der relativen Drehbewegung des Adapters relativ zum Körper ermöglichen und robust und einfach herzustellen sein.

Gelöst wird diese Aufgabe durch ein Verriegelungselement wie eingangs beschrieben, wobei das Schnappelement mit dem Hebelarm drehbar verbunden ist, wobei das Schnappelement drehbar um eine zum Bolzen parallele Drehachse mit dem Hebelarm verbunden ist.

Hierdurch kann die Richtung des Schnappelements verändert werden, in der der Hebelarm nach Einführen des Bolzens in einen Adapters einer Zug-Druck-Stange verschwenkt werden muss, um zu einer lösbaren Verriegelung einer Drehbewegung des Adapters relativ zum Körper einer Zug-Druck-Stange zu führen. Somit wird die Montage bei eingeschränkter Zugänglichkeit deutlich verbessert.

Das Schnappelement rastet in einem auf der Zug-Druck-Stange (auf dem Körper und/oder dem Adapter) montierten Zustand mit der Zug-Druck-Stange, ggf. unter Mitwirkung (durch Gegendruck) der Rasteinrichtung und/oder des Hebelarms ein. Die Rasteinrichtung ist zur lösbaren Verriegelung einer Drehbewegung des Adapters relativ zum Körper, insbesondere durch Zusammenwirken mit bzw. Eingriff in ein Gegenelement der Zug-Druck-Stange, ausgelegt. Vorteilhafterweise ist das Schnappelement derart ausgelegt, dass es in einem auf einer Zug-Druck-Stange montierten Zustand die Zug-Druck-Stange gegen die Rasteinrichtung drückt. Der Hebelarm kann bspw. plattenförmig ausgebildet sein. Der Bolzen befindet sich vorzugsweise in der Nähe des einen Endes des Hebelarms. Das Schnappelement befindet sich vorzugsweise an derselben Seite des Hebelarms wie der Bolzen und/oder die Rasteinrichtung. Das Schnappelement kann vorzugsweise um zumindest 180° gedreht werden. Bevorzugt kann allerdings das Verriegelungselement allerdings ausgelegt sein, dass eine vollständige Drehung des Schnappelements um 360° verhindert wird. Das Schnappelement kann vorzugsweise in einem in Richtung des Bolzens vorspringenden Abschnitt des Hebelarms angeordnet sein. Es ist möglich, dass das Schnappelement die Rasteinrichtung aufweist. Das Schnappelement und die Rasteinrichtung sind insbesondere vom Bolzen in Längserstreckungsrichtung des Hebelarms beabstandet.

Unter dem montierten Zustand wird jener Zustand verstanden, in dem der Bolzen des Verriegelungselements in einen Adapter einer Zug-Druck-Stange eingeführt ist und das Schnappelement mit der Zug-Druck-Stange verschnappt bzw. verriegelt ist. Der Hebelarm verläuft dann insbesondere längs bzw. parallel der Zug-Druck-Stange. Unter lösbarer Verriegelung wird insbesondere verstanden, dass die Rasteinrichtung, vorzugsweise gemeinsam mit dem Schnappelement, im montierten Zustand einer Drehbewegung des Adapters relativ zum Körper entgegenwirkt und somit eine ungewollte Verdrehung des Adapters gegenüber dem Körper und somit eine ungewollte Längenveränderung der Zug-Druck-Stange verhindert. Dabei kann eine Vielzahl an relativen Drehstellungen des Adapters zum Körper vorgesehen sein, in der diese Wirkung entfaltet werden kann. Insbesondere kann eine Drehbewegung im montierten Zustand (ohne Zerstörung des Verriegelungselements oder anderer Komponenten der Zug-Druck-Stange) verhindert werden. In diesem Fall muss zur Längenänderung der Zug-Druck-Stange der Hebelarm mit dem Schnappelement von der Zug-Druck-Stange weggeklappt werden und anschließend zur Verriegelung wieder hingeklappt werden. Weiters kann die Drehbewegung im montierten Zustand beaufschlagt werden, dass sie in einer Mehrzahl von Drehstellungen mit einer vorbestimmten Verriegelungskraft lösbar arretiert. In diesem Fall kann durch Aufbringung eines ausreichenden Drehmoments der Adapter auch im montierten Zustand relativ zum Körper gedreht werden.

Das Schnappelement des Verriegelungselements weist insbesondere eine Hinterschneidung auf, die ein Umfassen der Zug-Druck-Stange ermöglicht. Dabei ist das Schnappelement vorzugsweise elastisch ausgebildet, sodass die Zug-Druck-Stange hinter die Hinterschneidung gebracht werden kann. Vorzugsweise weist das Schnappelement ein aufgebogenes Ende auf, das es erleichtern kann, das Schnappelement entsprechend elastisch aufzubiegen, wenn es mit der Zug-Druck-Stange verschnappt werden soll. Es kann auch so ausgelegt sein, dass nach dem Einführen des Bolzens beim anschließend Verschwenken des Hebelarms die elastische Verbiegung des Schnappelements von selbst bewirkt wird, da dieses von der Einwirkung des Körpers und/oder Adapters auf das aufgebogene Ende in die entsprechende Richtung gedrückt wird. Nach Überwindung der Hinterscheidung verschnappt bzw. verrastet das Schnappelement

Das Verriegelungselement weist den Adapter und den Körper einer Zug-Druck-Stange nicht auf, sondern ist ausgelegt, mit diesen zusammenzuwirken. Um eine Definition des Verriegelungselements ohne Bezug zu einem bestimmten Körper und/oder Adapter einer Zug-Druck-Stange zu ermöglichen, wird vorzugsweise unter einem Schnappelement jede Vorrichtung verstanden, die mit irgendeiner Stange verschnappen kann (ggf. in Zusammenwirkung mit dem Hebelarm oder der Rasteinrichtung).

Das Schnappelement kann ausgelegt sein, im montierten Zustand auf dem Körper und/oder auf dem Adapter der Zug-Druck-Stange angeordnet zu sein. Es ist vorteilhaft, wenn das Schnappelement einen Teilring aufweist, welcher bevorzugt in der verriegelten (montierten) Stellung zur Anordnung auf dem Adapter oder dem Körper der Zug-Druck-Stange ausgebildet ist. Da der Adapter bei Zug-Druck-Stangen üblicherweise in den Körper eingeschoben und mit diesem über ein Gewinde verbunden ist, hat dieser einen geringeren Durchmesser. Daher ist es vorteilhaft, wenn das Schnappelement zur Anordnung auf dem Adapter in der montierten Stellung ausgebildet ist, da es hierdurch eine geringere Erstreckung aufweisen muss, wodurch die Montage bei eingeschränkter Zugänglichkeit vereinfacht wird. Alternativ oder zusätzlich kann das Schnappelement eckig ausgebildet sein. Insbesondere kann sich ein gerader plattenförmiger Abschnitt an den Teilring anschließend. Das Schnappelement, insbesondere der Teilring, kann auch zur Anordnung auf dem Körper in der montierten Stellung vorgesehen sein. Dies ist insbesondere bei kurzen Ausführungsformen, insbesondere kurzen Zug-Druck-Stangen, vorteilhaft, da in diesem Fall auf dem Adapter zu wenig Platz für ein zuverlässliches Verschnappen des Schnappelements sein kann.

Es ist bevorzugt, wenn das Schnappelement mit dem Hebelarm derart drehbar verbunden ist, dass das Schnappelement zumindest eine erste und eine zweite Drehstellung einnehmen kann, wobei eine Schnappöffnung des Schnappelements in der ersten Drehstellung zumindest in eine Richtung normal zur Längserstreckung des Bolzens und normal zur Längserstreckung des Hebelarms zeigt und die zweite Drehstellung um 180° gedreht zur ersten Drehstellung orientiert ist. Somit kann insbesondere bei Einschub des Bolzen aus derselben Richtung in den Adapter die Verriegelung durch eine Verschwenkung des Hebelarms in beide Richtungen, je nach Drehstellung, erfolgen.

Weiters wird die Montage bei eingeschränkter Zugänglichkeit vereinfacht, da das Schnappelement drehbar um eine zum Bolzen parallele Drehachse mit dem Hebelarm ist.

Es ist vorteilhaft, wenn das Rastelement vom Schnappelement in Längserstreckungsrichtung des Hebelarms beabstandet ist. Vorzugsweise liegt das Schnappelement näher am Bolzen als die Rasteinrichtung. Durch die Trennung der beiden Funktionen des Schnappelements und der Rasteinrichtung kann die verdrehbare Verbindung des Schnappelements mit dem Hebelarm konstruktiv einfacher verwirklicht werden. Weiters kann somit die Stabilität und somit Zuverlässigkeit der Rasteinrichtung verbessert werden.

Es ist vorteilhaft, wenn das Schnappelement und die Rasteinrichtung bezogen auf eine zu umfassende Zug-Druck-Stange gemeinsam einen Winkelbereich von mehr als 180° umfassen. Das bedeutet, dass das Schnappelement und die Rasteinrichtung gemeinsam zumindest eine Hinterscheidung bilden (in Richtung der Verschwenkung des Hebelarms, d.h. normal zum Hebelarm und zum Bolzen). Hierdurch kann ein besonders verlässliche Verbindung hergestellt werden. Die Schnappvorrichtung muss die Schnappfunktion nicht alleine erfüllen können, sondern es kann vorgesehen sein, dass das Verschnappen erst gemeinsam mit dem Hebelarm und/oder der Rasteinrichtung bewirkt wird.

Vorteilhafterweise weist die Rasteinrichtung zumindest eine Rastnase auf. Diese kann bspw. mit einem Zahnkranz eines Körpers einer Zug-Druck-Stange im montierten Zustand zusammenwirken bzw. in diesen eingreifen und in diesem verrasten. Die zumindest eine Rastnase weist vorzugsweise in Längserstreckungsrichtung des Hebelarms einen gleichbleibenden Querschnitt auf. Vorzugsweise ist der Querschnitt der Rastnase abgerundet, sodass durch ein ausreichendes Drehmoment eine Drehbewegung des Adapters relativ zum Körper im montierten Zustand möglich ist. Die zumindest eine Rastnase kann auch gemeinsam mit dem Schnappelement mit dem Körper bzw. Adapter verschnappen. Die Rasteinrichtung sollte ausgelegt sein, mit dem Körper zusammenzuwirken, um eine Drehbewegung des Adapters relativ zum Körper verhindern bzw. einschränken zu können.

Eine besonders verlässliche (lösbare) Verriegelung kann erzielt werden, wenn die Rasteinrichtung zwei Rastnasen aufweist. Diese sind vorteilhafterweise dazu ausgelegt, mit einem Zahnkranz eines Körpers einer Zug-Druck-Stange zusammenzuwirken. Dabei ist es besonders bevorzugt, wenn diese ausgelegt sind, in nicht miteinander benachbarte Ausnehmungen des Zahnkranzes einzugreifen. Bevorzugt sind die zwei Rastnasen um zumindest die Hälfte der größten Breitenerstreckung des Hebelarms im Bereich der Rasteinrichtung voneinander beabstandet. Durch das Vorsehen zweier Rastnasen ergibt sich ein verbesserter Halt des Verriegelungselements in der verriegelten Position.

Es ist vorteilhaft, wenn das Schnappelement über ein Drehgelenk mit dem Hebelarm verbunden ist. Dabei ist es besonders bevorzugt, wenn das Schnappelement im montierten Zustand auf einem Bereich auf einer Hälfte am Körper und/oder dem Adapter anliegt und die Rasteinrichtung mit dem Körper bzw. einem Gegenelement des Körpers in einem Bereich der dieser Hälfte gegenüberliegt mit dem Körper zusammenwirkt; bzw. das Schnappelement entsprechend ausgelegt ist. Somit kann vermieden werden, dass das Drehgelenk mit dem Körper oder dem Adapter der Zug-Druck-Stange in Berührung kommen muss.

Es ist bevorzugt, wenn das Schnappelement eine Platte aufweist, die auf dem Hebelarm aufliegt. Hierdurch kann die Stabilität verbessert werden bzw. können insbesondere Stabilitätsnachteile, die sich aus einer zweiteiligen Ausführung von Hebelarm und Schnappelement ergeben könnten, vermieden werden. Vorteilhafterweise liegt sie auf einem plattenförmigen Bereich des Hebelarms auf. Somit wird eine verlässliche Kraftübertragung zwischen Hebelarm und Schnappelement gewährleistet.

Gelöst wird die erfindungsgemäße Aufgabe auch durch eine oben genannte Zug-Druck-Stange mit einem Adapter und einem Körper, wobei die Zug-Druck-Stange das oben beschriebene Verriegelungselement aufweist. Dabei ist die Verdrehbarkeit des Schnappelements in einer Vorbereitungsstellung (d.h. in nicht montierten Stellung) gegeben. Zu den dadurch erzielbaren Vorteilen der Zug_Druck-Stange wird auf die obige Beschreibung des Verriegelungselements verwiesen.

Vorteilhafterweise weist die Zug-Druck-Stange zwei Adapter auf, wobei in jedes der beiden Enden des Körpers ein Adapter eingebracht ist. Vorzugsweise weist die Zug-Druck-Stange ein Gegenelement auf, dass mit der Rasteinrichtung zusammenwirken kann bzw. in das die Rasteinrichtung eingreifen kann. Vorteilhafterweise ist somit eine formschlüssige Verbindung zur lösbaren Verriegelung möglich. Alternativ oder zusätzlich kann auch eine kraftschlüssige Verbindung vorgesehen sein. In diesem Fall muss auch kein Gegenelement vorgesehen sein.

Vorzugsweise ist ein Federelement vorgesehen, dass das Gewinde des Körpers und das Gewinde des Adapters gegeneinander drückt, wodurch die Stabilität verbessert werden kann. Weiters können somit ungewünschte Geräusche vermieden werden. Vorteilhafterweise weist die Rasteinrichtung eine größere Längserstreckung in Längserstreckungsrichtung der Zug-Druck-Stange auf als das Gegenelement (im montierten Zustand).

Es ist vorteilhaft, wenn das Schnappelement in einer Vorbereitungsstellung um eine Drehachse drehbar ist, die normal zur Längserstreckungsrichtung der Zug-Druck-Stange im montierten Zustand des Verriegelungselements ist. Die Vorbereitungsstellung ist jene Stellung, in der der Hebelarm nicht über den Körper bzw. Adapter geklappt ist und somit das Schnappelement nicht mit diesen verschnappt ist.

In einer bevorzugten Ausführungsform weist der Körper einen Zahnkranz auf, in welchen die zumindest eine Rastnase der Rasteinrichtung eingreifbar ausgebildet ist. D.h. als Gegenelement ist ein Zahnkranz vorgesehen. Mittels des Zahnkranzes ist eine lösbare Verriegelung der Drehbewegung des Adapters relativ zum Körper in einer Vielzahl an Drehstellungen möglich.

Vorteilhafterweise ist die Rasteinrichtung in Längserstreckungsrichtung der Zug-Druck-Stange länger ausgebildet ist als die Breite des Zahnkranzes. Hierdurch kann die Produktion vereinfacht werden. Vorzugsweise weist die Rasteinrichtung, insbesondere die zumindest eine Rastnase, eine Breite in Längserstreckungsrichtung der Zug-Druck-Stange auf, die größer ist als die Länge, um die die Zug-Druck-Stange verstellt werden kann. Somit wird sichergestellt, dass die Rasteinrichtung in jeder Längeneinstellung der Zug-Druck-Stange in den Zahnkranz eingreifen kann. Wenn die Rasteinrichtung auf dem Schnappelement vorgesehen ist und/oder diese einstückig ausgebildet sind, ist es vorteilhaft, wenn die Rasteinrichtung (insbesondere die Rastnase) und das Schnappelement (insbesondere der Teilring) eine Breite in Längserstreckungsrichtung der Zug-Druck-Stange (in der montierten Stellung) aufweisen, die größer ist als die Länge, um die die Zug-Druck-Stange verstellt werden kann.

Es ist bevorzugt, wenn das Schnappelement im montierten Zustand des Verriegelungselements den Adapter teilweise umfasst. Hierdurch kann einerseits die Montage in beengten Platzverhältnissen verbessert werden, da die Dimensionen des Schnappelements geringer sein können. Weiters kann durch die kompaktere Bauweise die Stabilität verbessert werden. Auch muss somit bspw. bei Vorsehen eines Zahnkranzes am Körper das Schnappelement nicht auf diesem Aufliegen, sondern kann auf einem rohrförmigen Abschnitt des Adapters anliegen.

In einer vorteilhaften Ausführungsform weist der Adapter eine zylinderförmige Mantelfläche, deren Längserstreckung in Längserstreckungsrichtung der Zug-Druck-Stange zumindest der Längserstreckung des Schnappelements bzw. insbesondere eines Teilrings des Schnappelements entspricht. Hiermit kann die Zuverlässigkeit der Verschnappung verbessert werden.

Es können Begrenzungen, bspw. ein oder mehrere Vorsprünge, um einen Abschnitt oder auf einer Randseite eines Abschnitts des Körpers und/oder des Adapters, an den das Schnappelement im montierten Zustand anliegt, vorgesehen sein. Diese können die Stabilität verbessern, insbesondere im Hinblick auf die Verdrehbarkeit des Schnappelements.

Vorteilhafterweise weist das Schnappelement Federstahl auf. Hierdurch kann die Stabilität, insbesondere auch nach mehrmaliger elastischer Verformung, verbessert werden.Der Hebelarm und/ oder die Rasteinrichtung können Federstahl aufweisen.

Im Folgenden wird die Erfindung anhand von in den Figuren gezeigten bevorzugten Ausführungsformen des Verriegelungselements und der Zug-Druck-Stange näher erläutert. Die Figuren zeigen im Einzelnen:
- Fig. 1a: eine bevorzugte Ausführungsform des erfindungsgemäßen Verriegelungselements in einer Ansicht von schräg hinten;
- Fig. 1b: dasselbe Verriegelungselement wie Fig. 1a von schräg vorne;
- Fig. 1c: dasselbe Verriegelungselement wie Fig. 1a mit um einen kleinen Winkel gedrehtem Schnappelement;
- Fig. 1d: dasselbe Verriegelungselement wie Fig. 1a mit einem um 180° gedrehten Schnappelement;
- Fig. 2a: dasselbe Verriegelungselement wie Fig. 1a in einer Queransicht;
- Fig. 2b: eine Schnittansicht desselben Verriegelungselements wie Fig. 1a;
- Fig. 2c: dasselbe Verriegelungselement wie Fig. 1a in der Stellung der Fig. 1d in einer Queransicht;
- Fig. 2d: eine Schnittansicht desselben Verriegungselements wie Fig. 1a in der Stellung der Fig. 1d;
- Fig. 3a: dasselbe Verriegelungselement wie Fig. 1a in der Stellung der Fig. 1d von vorne;
- Fig. 3b: dasselbe Verriegelungselement wie Fig. 1a in der Stellung der Fig. 1d von hinten;
- Fig. 3c: dasselbe Verriegelungselement wie Fig. 1a in der Stellung der Fig. 1d von der Seite;
- Fig. 3d: dasselbe Verriegelungselement wie Fig. 1a von der Seite;
- Fig. 4a: eine bevorzugte Ausführungsform der erfindungsgemäßen Zug-Druck-Stange mit dem Verriegelungselement der Fig. 1a im montierten Zustand;
- Fig. 4b: dieselbe Zug-Druck-Stange wie Fig. 4a mit dem Verriegelungselement in teilweise weggeklappten Zustand;
- Fig. 5a: dieselbe Zug-Druck-Stange wie Fig. 4a mit dem Verriegelungselement in teilweise weggeklappten Zustand von der Seite;
- Fig. 5b: dieselbe Zug-Druck-Stange wie Fig. 4a mit dem Verriegelungselement in weggeklappten Zustand von der Seite;
- Fig. 6a: dieselbe Zug-Druck-Stange wie Fig. 4a mit dem Verriegelungselement in montiertem Zustand von der Seite;
- Fig. 6b: dieselbe Zug-Druck-Stange wie Fig. 4a mit dem Verriegelungselement in montiertem Zustand von der anderen Seite;
- Fig. 6c: eine Schnittansicht der Zug-Druck-Stange der Fig. 6b;
- Fig. 6d: die Zug-Druck-Stange in derselben Ansicht wie Fig. 6a mit dem Verriegelungselement in von der anderen Seite montiertem Zustand;
- Fig. 6e: die Zug-Druck-Stange in derselben Ansicht wie Fig. 6b mit dem Verriegelungselement in von der anderen Seite montiertem Zustand;
- Fig. 7a: eine Schnittansicht entlang der Rasteinrichtung der Fig. 6e;
- Fig. 7b: eine Schnittansicht der Fig. 6e, die die Drehachse des Schnappelements zeigt;
- Fig. 7c: eine Schnittansicht wie Fig. 7b abseits der Drehachse des Schnappelements;
- Fig. 7d: eine Seitenansicht der Zug-Druck-Stange der Fig. 6e;
- Fig. 8a: eine weitere bevorzugte Ausführungsform des erfindungsgemäßen Verriegelungselements in einer Ansicht von schräg vorne;
- Fig. 8b: dasselbe Verriegelungselement wie Fig. 8a mit einem um 180° gedrehten Schnappelement;
- Fig. 9a: dasselbe Verriegelungselement wie Fig. 8a von vorne;
- Fig. 9b: dasselbe Verriegelungselement wie Fig. 8a von der Seite;
- Fig. 10a: dasselbe Verriegelungselement wie Fig. 8a in einer Queransicht;
- Fig. 10b: dasselbe Verriegelungselement wie Fig. 8a in einer Schnittansicht durch die Ebene C-C der Fig. 9a
- Fig. 11a: eine weitere bevorzugte Ausführungsform der erfindungsgemäßen Zug-Druck-Stange mit dem Verriegelungselement der Fig. 8a vor dessen Montage;
- Fig. 11b: dieselbe Zug-Druck-Stange wie Fig. 11a mit dem Verriegelungselement in montiertem Zustand;
- Fig. 12a: dieselbe Zug-Druck-Stange wie Fig. 11a von der Seite mit dem Verriegelungselement im montierten Zustand;
- Fig. 12b: dieselbe Zug-Druck-Stange wie Fig. 11a in einer Schnittansicht durch die Ebene A-A der Fig. 12a;
- Fig. 13: dieselbe Zug-Druck-Stange wie Fig. 11a in einer Schnittansicht durch die Ebene B-B der Fig. 12b
- Fig. 14a: eine weitere bevorzugte Ausführungsform des erfindungsgemäßen Verriegelungselements in einer Ansicht von schräg vorne;
- Fig. 14b: dasselbe Verriegelungselement wie Fig. 14a mit einem um 180° gedrehten Schnappelement;
- Fig. 15a: dasselbe Verriegelungselement wie Fig. 14a von vorne;
- Fig. 15b: dasselbe Verriegelungselement wie Fig. 14a von der Seite;
- Fig. 16a: dasselbe Verriegelungselement wie Fig. 14a in einer Queransicht;
- Fig. 16b: dasselbe Verriegelungselement wie Fig. 14a in einer Schnittansicht durch die Ebene C-C der Fig. 15a
- Fig. 17a: eine weitere bevorzugte Ausführungsform der erfindungsgemäßen Zug-Druck-Stange mit dem Verriegelungselement der Fig. 14a vor dessen Montage;
- Fig. 17b: dieselbe Zug-Druck-Stange wie Fig. 17a mit dem Verriegelungselement in montiertem Zustand;
- Fig. 18a: dieselbe Zug-Druck-Stange wie Fig. 17a von der Seite mit dem Verriegelungselement im montierten Zustand;
- Fig. 18b: dieselbe Zug-Druck-Stange wie Fig. 17a in einer Schnittansicht durch die Ebene A-A der Fig. 18a; und
- Fig. 19: dieselbe Zug-Druck-Stange wie Fig. 17a in einer Schnittansicht durch die Ebene B-B der Fig. 18b.

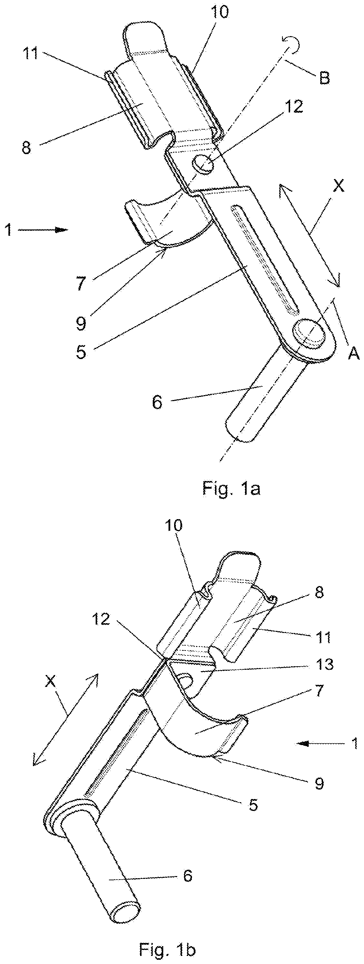

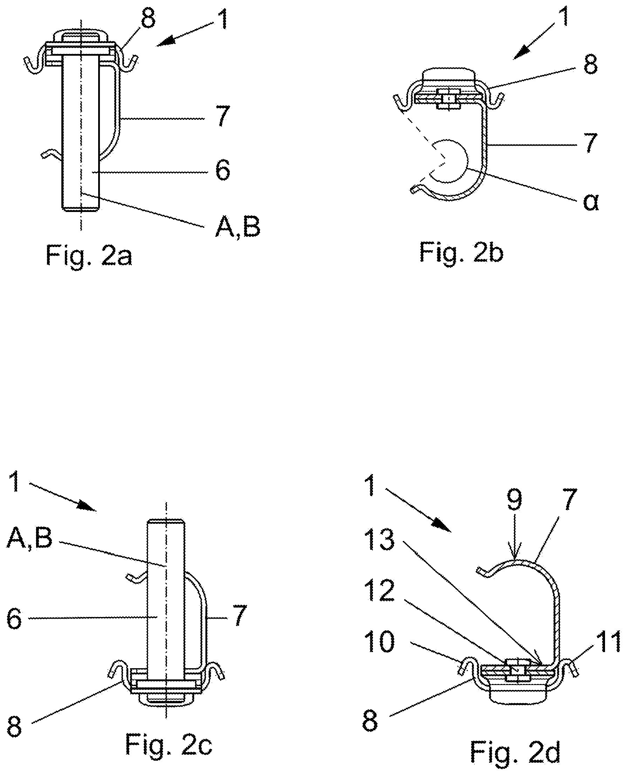

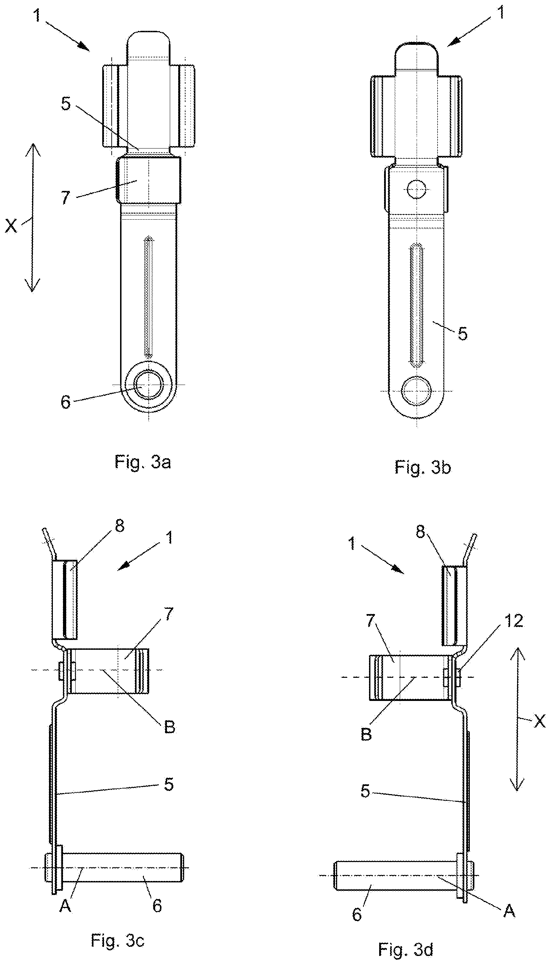

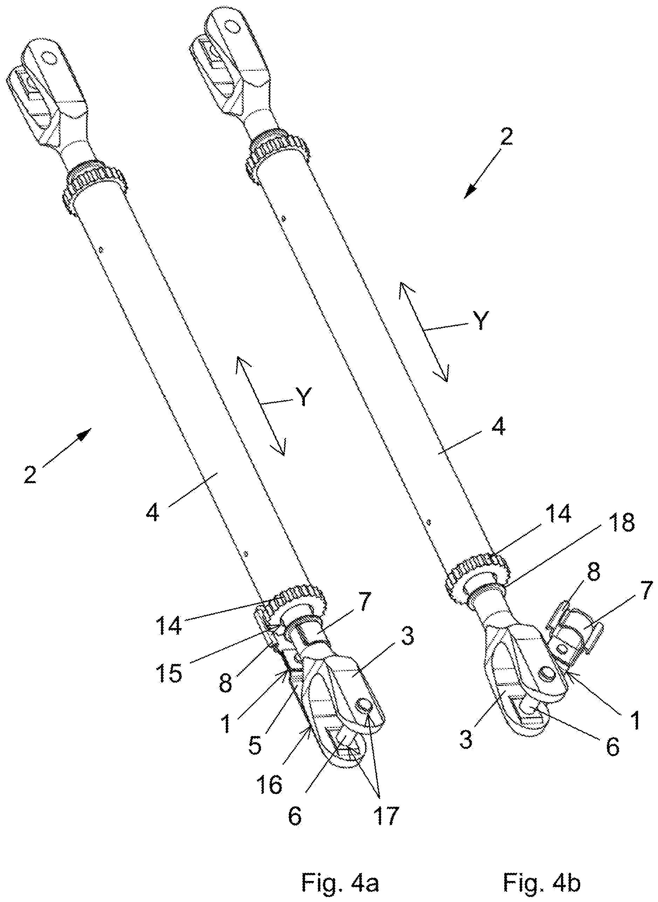

Die Fig. 1a bis 1d, 2a bis 2d und 3a bis 3d zeigen eine bevorzugte Ausführungsform desselben Verriegelungselements 1 zur lösbaren Verriegelung eines Adapters 3 relativ zu einem Körper 4 einer Zug-Druck-Stange 2 (siehe bspw. Fig. 4a und 4b). Die Fig. 1a bis 1d zeigen das Verriegelungselement 1 in einer Schrägansicht, die Fig. 2a und 2c in einer Queransicht, die Fig. 2b und 2d in einer Schnittansicht und die Fig. 3a bis 3d in einer Draufsicht von vorne, hinten und den Seiten.

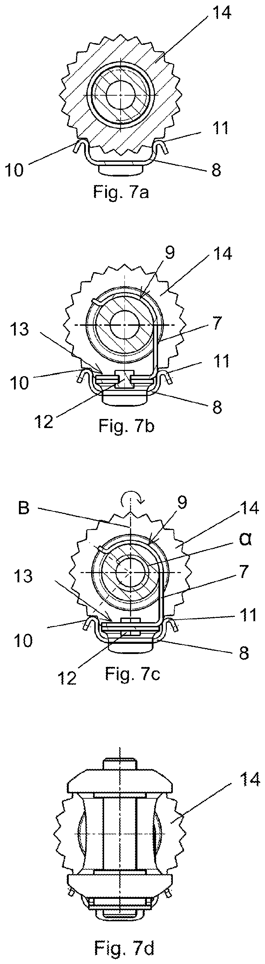

Das Verriegelungselement 1 weist einen Hebelarm 5 und einen mit dem Hebelarm 5 verbundenen Bolzen 6 auf. Weiters weist das Verriegelungselement 1 ein Schnappelement 7 und eine Rasteinrichtung 8 auf. Das Schnappelement 7 ist mit dem Hebelarm 5 drehbar um eine Drehachse B verbunden. Die Drehachse B ist parallel zur Längserstreckungsrichtung A des Bolzens 6 angeordnet. Das Schnappelement 7 weist einen Teilring 9 auf, der in der verriegelten Stellung zur Anordnung auf dem Adapter 3 der Zug-Druck-Stange 2 ausgebildet ist (siehe bpsw. Fig. 4a, 7b und 7c). Die Rasteinrichtung 8 ist mit dem Hebelarm 5 verbunden.

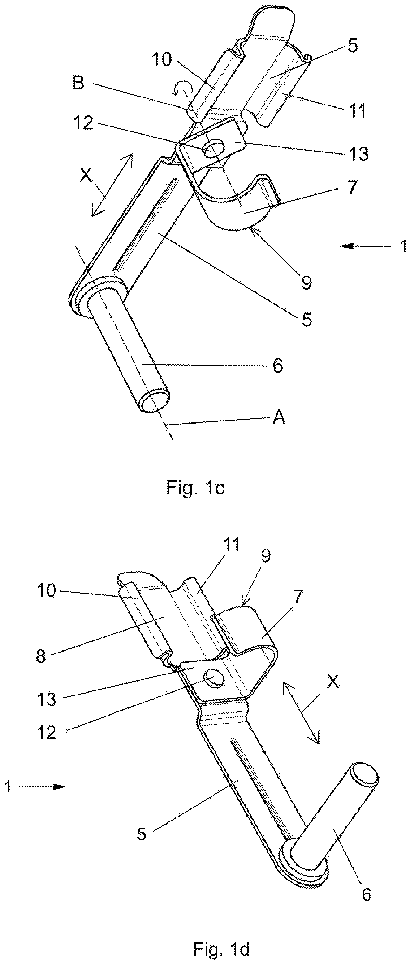

Das Schnappelement 7 ist mit dem Hebelarm 5 derart drehbar verbunden, sodass das Schnappelement 7 zumindest eine erste und eine zweite Drehstellung einnehmen kann, wobei eine Schnappöffnung des Schnappelements 7 in der ersten Drehstellung zumindest in eine Richtung normal zur Längserstreckungsrichtung A des Bolzens 6 und normal zur Längserstreckungsrichtung X des Hebelarms 5 zeigt und die zweite Drehstellung um 180° gedreht zur ersten Drehstellung orientiert ist. Fig. 1a, 1b, 2a, 2b und 3d zeigen das Schnappelement 7 in der ersten Drehstellung und Fig. 1d, 2c, 2d und 3a bis 3c zeigen das Schnappelement 7 in der zweiten Drehstellung. Fig. 1c zeigt eine Übergangsdrehstellung, in der das Schnappelement 7 nur um einen kleineren Winkel um die Drehachse B gedreht ist. Es ist aus den Figuren weiters ersichtlich, dass das Schnappelement 7 drehbar um eine zum Bolzen 6 parallele Drehachse B mit dem Hebelarm 5 verbunden ist. Die Längsachse des Bolzens 6 ist mit A bezeichnet.

In der gezeigten Ausführungsform ist die Rasteinrichtung 8 vom Schnappelement 7 in Längserstreckungsrichtung X des Hebelarms 5 beabstandet. Im Konkreten ist die Rasteinrichtung 8 weiter weg vom Bolzen 6 am Hebelarm 5 angeordnet als das Schnappelement 7. Selbstverständlich könnte die Rasteinrichtung 8 auch näher am Bolzen 6 angeordnet sein als das Schnappelement 7. Weiters ist es möglich, dass die Rasteinrichtung 8 und das Schnappelement 7 voneinander nicht beabstandet sind. Bspw. könnte das Schnappelement 7 die Rasteinrichtung 8 aufweisen. Somit könnte die Rasteinrichtung 8 gemeinsam mit dem Schnappelement 7 drehbar sein.

Das Schnappelement 7 und die Rasteinrichtung 8 umfassen bezogen auf eine zu umfassende Zug-Druck-Stange 2 gemeinsam einen Winkelbereich α von mehr als 180° umfassen. Als Mittelpunkt für die Berechnung des Winkelbereichs α wird ausgegangen von einer Stange mit abschnittsweiser zylinderförmiger Mantelfläche, wobei die zylinderförmige Mantelfläche im Bereich der Rasteinrichtung 8 und des Schnappelements 7 jeweils den maximal möglichen Durchmesser einnimmt, wobei die Mittelpunkte der zylinderförmigen Mantelfläche gleich bleiben. Der Winkelbereich α wird bezogen auf den maximal abgedeckten Winkelbereich, auch wenn die Abdeckung an unterschiedlichen Tiefen der Längserstreckungsrichtung X des Hebelarms 5 erfolgt.

Die Rasteinrichtung 8 weist in der gezeigten Ausführungsform zwei Rastnasen 10, 11 auf. Das Schnappelement 7 ist über das Drehgelenk 12 drehbar mit dem Hebelarm 5 verbunden. Das Schnappelement 7 weist eine Platte 13 auf, die auf einem plattenförmigen Abschnitt des Hebelarms 5 aufliegt.

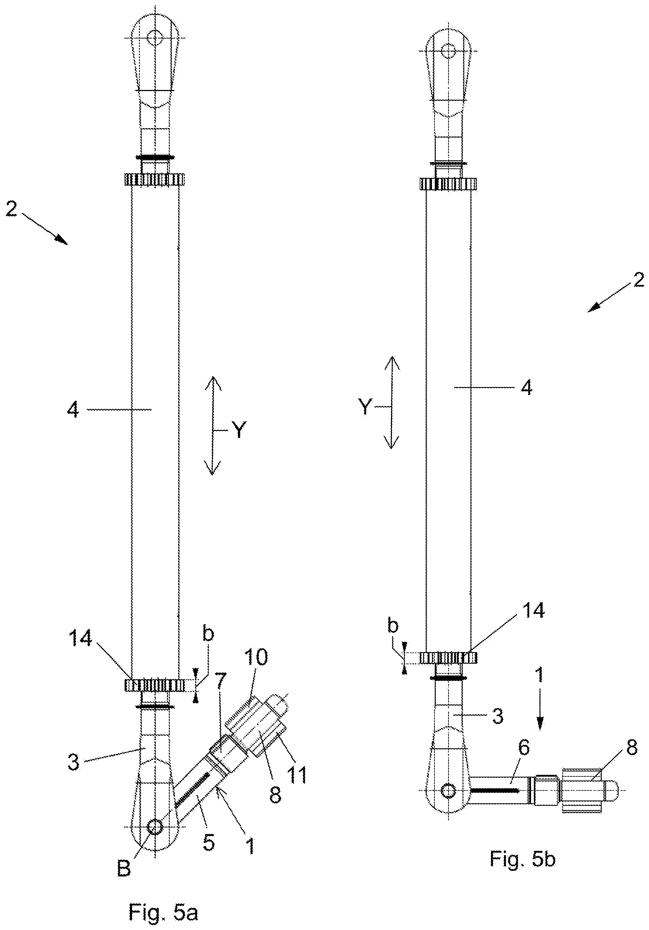

Die Fig. 4a, 4b, 5a, 5b, 6a bis 6e und 7a bis 7d zeigen eine bevorzugte Ausführungsform einer Zug-Druck-Stange 2 mit dem bereits in Zusammenhang der Figuren 1a bis 3d beschriebenen Verriegelungselement 1. Dabei zeigen die Fig. 4a und 6a bis 7d das Verriegelungselement 1 im montierten Zustand, in dem eine Drehbewegung eines Adapters 3 relativ zum Körper 4 der Zug-Druck-Stange 2 verriegelt (d.h. blockiert) ist. In den Figuren 4b, 5a und 5b ist das Verriegelungselement 1 bzw. der Hebelarm 5 vom Körper 4 bzw. vom Adapter 3 der Zug-Druck-Stange 2 weggeklappt. In dieser Vorbereitungsstellung ist ein Verdrehen des Adapters 3 relativ zum Körper 4 und somit eine Veränderung der Länge der Zug-Druck-Stange 2 möglich. Selbstverständlich muss der Bolzen 6 in der Vorbereitungsstellung nicht in den Adapter 3 eingeführt sein. Das Schnappelement 7 ist in der Vorbereitungsstellung um eine Drehachse B drehbar, die normal zur Längserstreckungsrichtung Y der Zug-Druck-Stange 2 im montierten Zustand des Verriegelungselements 1 ist.

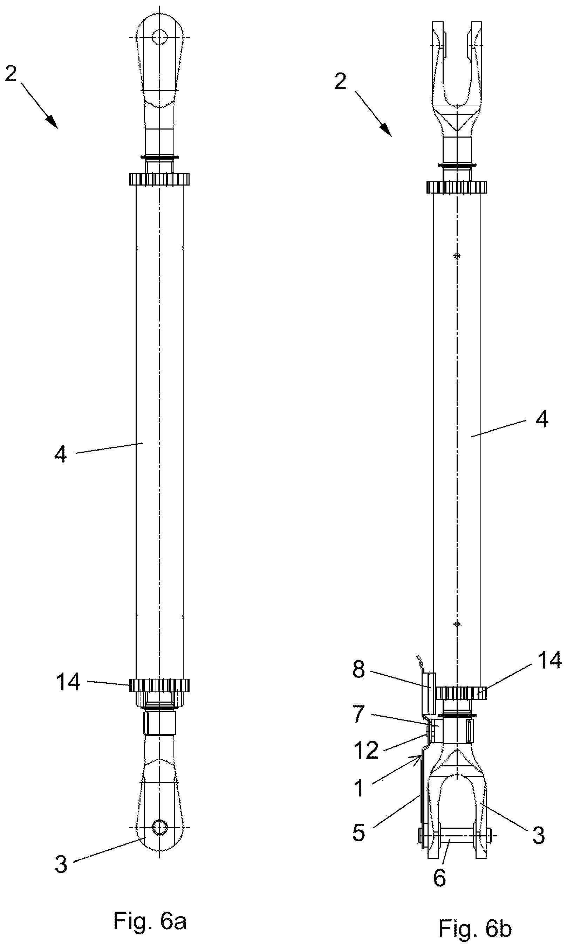

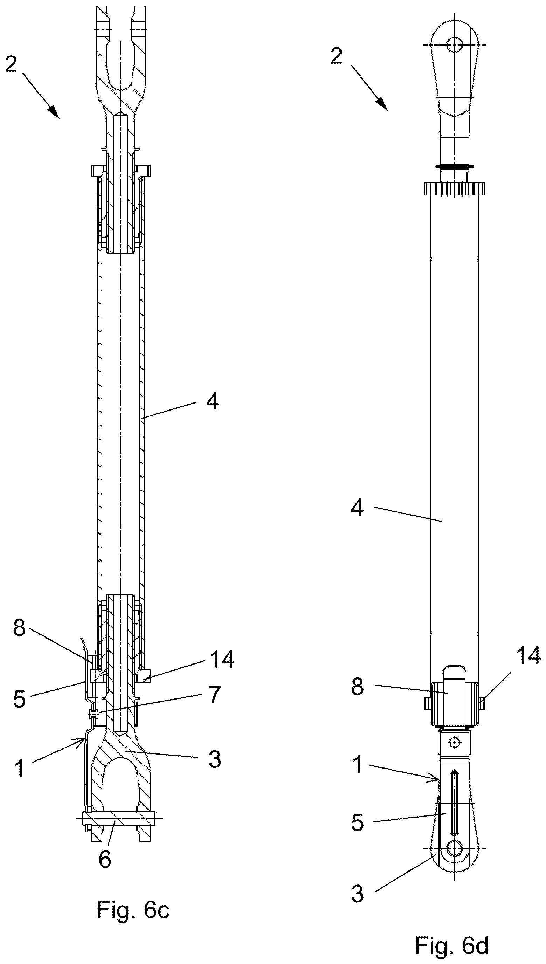

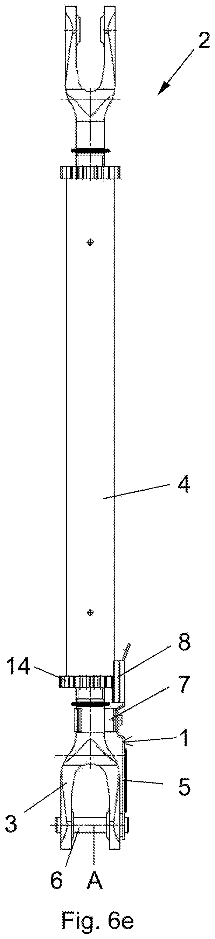

Die Fig. 4a und 4b zeigen die Zug-Druck-Stange 2 in einer Schrägansicht, die Fig. 5a, 5b, 6a, 6d von der einen Seite, die Fig. 6b und 6e von der anderen Seite, Fig. 6c in einem Schnitt entlang derselben Seite wie Fig. 6b, und die Figuren 7a bis 7d Schnitte durch eine Ebene normal zur Längserstreckungsrichtung Y der Zug-Druck-Stange 2.

Die gezeigte Zug-Druck-Stange 2 weist an ihrem zweiten Ende einen zweiten teilweise in den Körper 4 geschobenen Adapter auf. In der gezeigten Ausführungsform ist der zweite Adapter nicht mit dem Körper 4 mit einem Verriegelungselement 1 verriegelt; dies wäre jedoch selbstverständlich möglich.

Der Adapter 3 weist einen zylinderförmigen Abschnitt 15 und einen gabelförmigen Endabschnitt 16 auf. Der zylinderförmige Abschnitt 15 ist größtenteils in den Körper 4 eingeschoben. Der zylinderförmige Abschnitt 15 weist auf seinem Außenmantel ein Gewinde auf, das mit einem auf einem Innenmantel des Körpers 4 vorgesehenen Gewinde zusammenwirkt (nicht gezeigt). Der Adapter 3 weist im zylinderförmigen Abschnitt 15 zwei Ösen 17 auf, durch die der Bolzen 6 geführt wird. Weiters weist der Adapter 3 auf seinem zylinderförmigen Abschnitt 15 eine Begrenzung 18 in Form eines umlaufenden Vorsprungs auf. Im montierten Zustand liegt das Schnappelement 7, insbesondere der Teilring 9 des Schnappelements am zylinderförmigen Abschnitt 15 des Adapters 3 zwischen der Begrenzung 18 und dem gabelförmigen Endabschnitt 16 an und umfasst somit den Adapter 3 teilweise. Demgemäß entspricht die Längserstreckung der (rein) zylinderförmigen Mantelfläche des Adapters 3 in Längserstreckungsrichtung Y der Zug-Druck-Stange 2 zumindest der Längserstreckung des Schnappelements 7.

Der Körper 4 weist einen Zahnkranz 14 an einem Endabschnitt seines zylinderförmigen Mantels auf, in welchen die beiden Rastnasen 10, 11 der Rasteinrichtung 8 eingreifbar ausgebildet sind bzw. in welche die beiden Rastnasen 10, 11 in der montierten Stellung eingreifen. Um auch bei einer Längenveränderung der Zug-Druck-Stange 2 ein Zusammenwirken der Rasteinrichtung 8 und eines Gegenelements der Zug-Druck-Stange 2, im Konkreten des Zahnkranzes 14 des Körpers 4, zu ermöglichen, muss zumindest eines der beiden eine entsprechende Erstreckung in Längserstreckungsrichtung Y der Zug-Druck-Stange 2 aufweisen. Bei der vorliegenden Ausführungsform sind die beiden Rastnasen 10, 11 der Rasteinrichtung 8 in Längserstreckungsrichtung Y der Zug-Druck-Stange 2 länger ausgebildet als die Breite b des Zahnkranzes 14. Dadurch kann die Breite b des konstruktiv schwierigeren Zahnkranzes 14 verringert werden, während die Rastnasen 10, 11, die einfacher herzustellen sind, die notwendige Längserstreckung aufweisen.

Das Schnappelement 3, insbesondere der Teilring 9, kann bspw. aus Federstahl bestehen.

Die Zug-Druck-Stange 2 bzw. das Verriegelungselement 1 wird nun folgendermaßen montiert. Es wird durch relative Drehung des Adapters 3 zum Körper 4 die gewünschte Länge der Zug-Druck-Stange 2 eingestellt. Es wird das Schnappelement 7 in eine gewünschte Drehstellung rotiert und der Bolzen 6 in die Ösen 13 des Adapter 3 eingeführt. Anschließend wird der Hebelarm 5 verschwenkt, sodass das Schnappelement 7 auf der Zug-Druck-Stange 2, insbesondere dem Adapter 3, einschnappt. Die Rasteinrichtung 8 greift nun in den Zahnkranz 14 des Körpers 4 der Zug-Druck-Stange 2 ein.

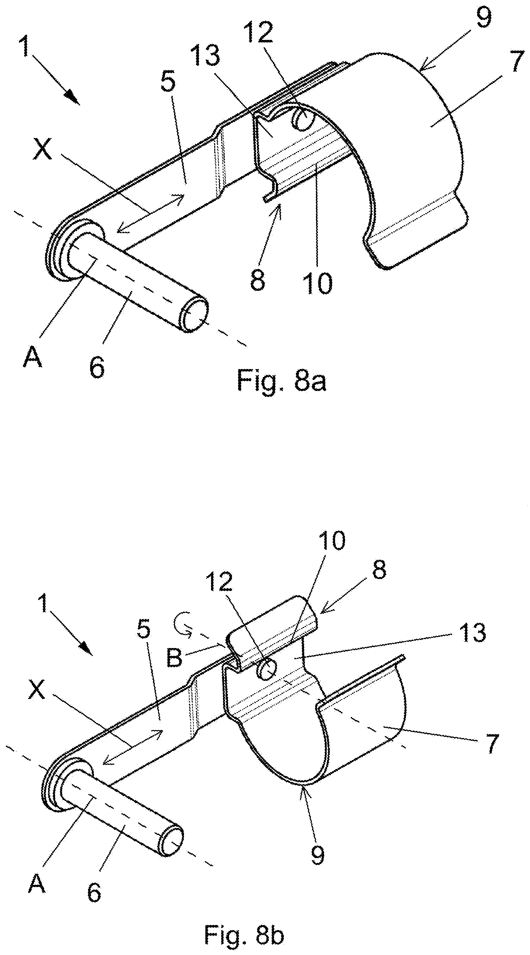

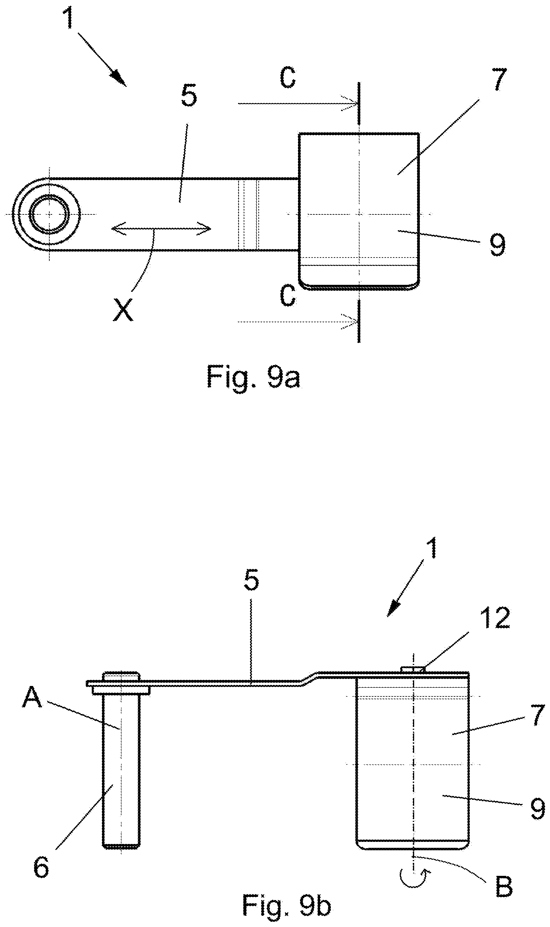

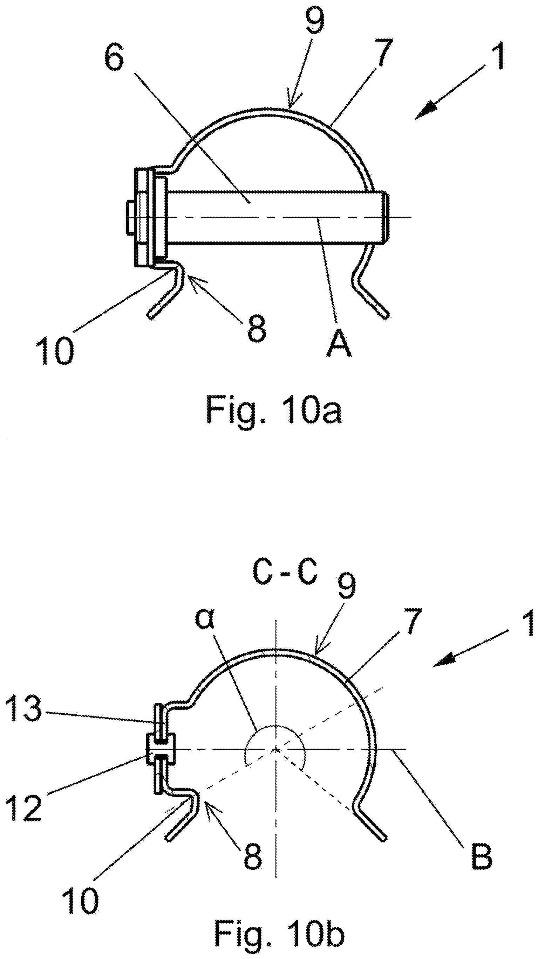

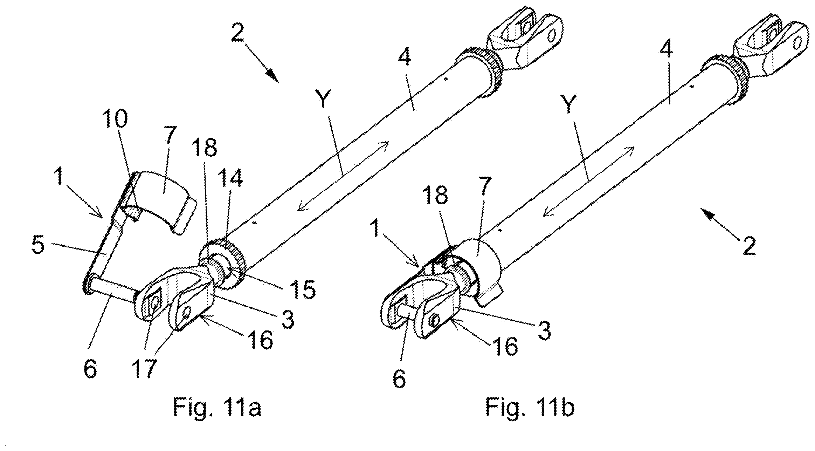

Die Fig. 8a, 8b, 9a, 9b, 10a und 10b zeigen eine bevorzugte Ausführungsform desselben Verriegelungselements 1 zur lösbaren Verriegelung des Adapters 3 relativ zu dem Körper 4 der Zug-Druck-Stange 2 (siehe bspw. Fig. 11a und 11b). Die Fig. 8a und 8b zeigen das Verriegelungselement 1 in einer Schrägansicht, die Fig. 9a und 9b in einer Draufsicht von vorne und von der Seite, die Fig. 10a in einer Queransicht und die Fig. 10b in einer Schnittansicht entlang der Ebene C-C der Fig. 9a.

Die in den Fig. 8a bis 10b gezeigte Ausführungsform funktioniert weitgehend gleich der oben im Zusammenhang mit den Fig. 1a bis 3d beschriebenen Ausführungsform. Zur Vermeidung von Wiederholungen werden daher funktionell gleiche Teile mit gleichen Bezugsziffern bezeichnet und es wird diesbezüglich auf die obige Beschreibung verwiesen.

Der deutlichste Unterschied der Ausführungsform der Fig. 8a bis 10b von der Ausführungsform der Fig. 1a bis 3d ist, dass das Schnappelement 7 und die Rasteinrichtung 8 einstückig ausgeführt sind bzw. das Schnappelement 7 die Rasteinrichtung 8 aufweist. Daher ist gemeinsam mit dem Schnappelement 7 auch die Rasteinrichtung 8 drehbar mit dem Hebelarm 5 verbunden. Das Schnappelement 7 und die Rasteinrichtung 8 sind mit dem Hebelarm 5 derart um die Drehachse B drehbar verbunden, dass das Schnappelement 7 und die Rasteinrichtung zumindest eine erste und eine zweite Drehstellung einnehmen können, wobei eine Schnappöffnung des Schnappelements 7 in der ersten Drehstellung zumindest in eine Richtung normal zur Längserstreckungsrichtung A des Bolzens 6 und normal zur Längserstreckungsrichtung X des Hebelarms 5 zeigt und die zweite Drehstellung um 180° gedreht zur ersten Drehstellung orientiert ist. In Fig. 8b sind das Schnappelement 7 und die Rasteinrichtung 8 gegenüber Fig. 8a um 180° gedreht. Wenn der Bolzen 6 somit in derselben Richtung in den Adapter 3 eingeführt wird, kann der Adapter 3 relativ zum Körper 4 somit durch Verschwenken des Verriegelungselement 1 in die eine oder in die andere Richtung (je nach Drehstellung) lösbar verriegelt werden. Somit kann auf Gegebenheiten der Montageumgebung besser Rücksicht genommen werden und die Montage der Zug-Druck-Stange 2 wird vereinfacht.

Das Schnappelement 7 weist wiederum eine Platte 13 auf, die auf einem plattenförmigen Abschnitt des Hebelarms 5 aufliegt. Das Schnappelement 7 weist weiters wiederum einen Teilring 9 auf, der in der verriegelten Stellung jedoch im Unterschied zur Ausführungsform der Fig. 1a bis 3d zur Anordnung auf dem Körper 4 der Zug-Druck-Stange 2, insbesondere zur Umfassung des Zahnkranzes 14, ausgebildet ist (vgl. beispielsweise Fig. 11b).

Die Rasteinrichtung 8 weist eine Rastnase 10 auf, die dem Teilring 9 im Wesentlichen gegenüberliegt. Die Rastnase 10 weist im Wesentlichen dieselbe Breite wie der Teilring 9 auf (in Längserstreckungsrichtung X des Hebelarms 5, wenn das Schnappelement 7 in der Drehstellung der Fig. 8a oder Fig. 8b ist, d.h. wenn die Rastnase in Richtung der Längserstreckungsrichtung X des Hebelarms 5 verläuft).

Die Fig. 11a, 11b, 12a, 12b und 13 zeigen eine weitere bevorzugte Ausführungsform der Zug-Druck-Stange 2 mit dem bereits in Zusammenhang der Figuren 8a bis 10b beschriebenen Verriegelungselement 1. Der Adapter 3 und der Körper 4 der Zug-Druck-Stange 2 sind im Wesentlichen gleich ausgeführt wie jene der im Zusammenhang mit den 4a bis 7d beschriebenen Zug-Druck-Stange 2. Zur Vermeidung von Wiederholungen werden daher wiederum funktionell gleiche Teile mit gleichen Bezugsziffern bezeichnet und es wird diesbezüglich auf die obige Beschreibung verwiesen.

Fig. 11a zeigt das Verriegelungselement 1 dabei vor dem Einführen des Bolzens 6 in die Ösen 17 des Adapters 3. Die Fig. 11b bis 13 zeigen das Verriegelungselement 1 in der montierten Stellung.

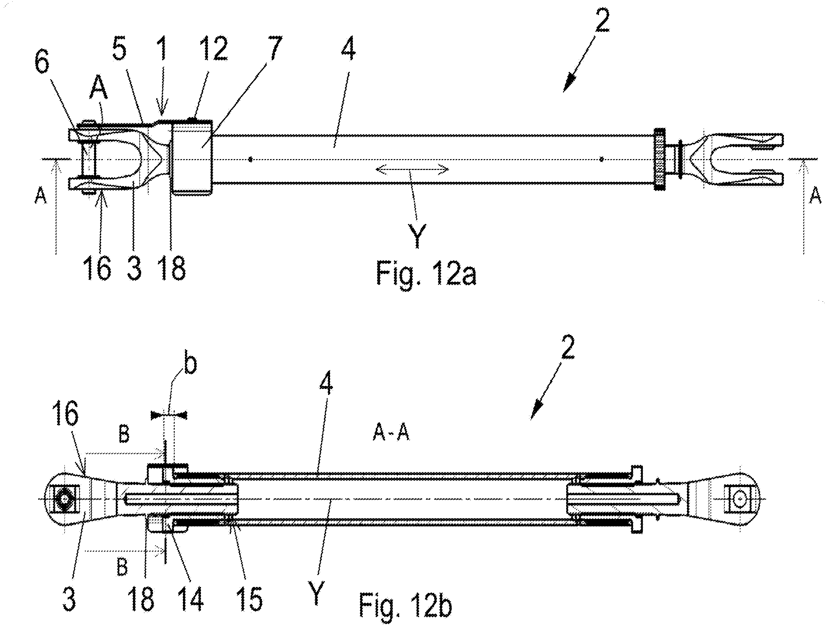

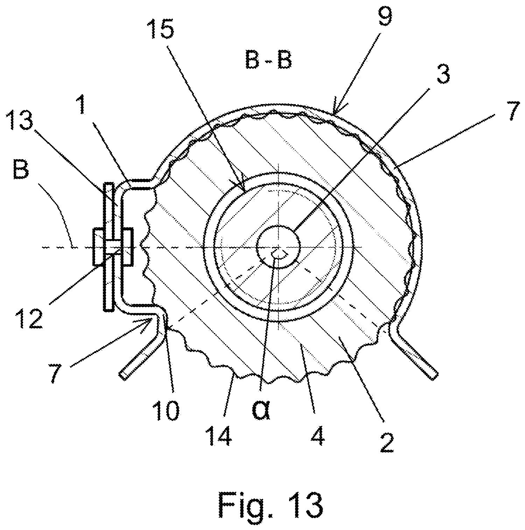

Die Fig. 11a und 11b zeigen die Zug-Druck-Stange 2 in einer Schrägansicht, die Fig. 12a von der Seite, die Fig. 12b in einem Schnitt entlang der Ebene A-A in der Fig. 12a, und die Fig. 13 in einem Schnitt entlang der Ebene B-B in der Fig. 12b. Wie bereits im Zusammenhang mit den Figuren 8a bis 10b erwähnt, ist der Teilring 9 des Schnappelements 7 in der verriegelten Stellung zur Anordnung auf dem Körper 4 der Zug-Druck-Stange 2 ausgebildet. Der Teilring 9 umfasst den Zahnkranz 14 am Körper 4 und drückt somit die dem Teilring 9 ungefähr gegenüber angeordnete Rastnase 10 in den Zahnkranz 14. Die Rastnase 10 und der Teilring 9 weisen eine Breite in die Längserstreckungsrichtung Y der Zug-Druck-Stange 2 (in der montierten Stellung) auf, die größer ist als die Länge, um die die Zug-Druck-Stange 2 durch Verdrehen des Adapters 3 relativ zum Körper 4 verstellt werden kann, d.h. beispielsweise länger als zusammenwirkende Gewinde des Adapters 3 und des Körpers 4.

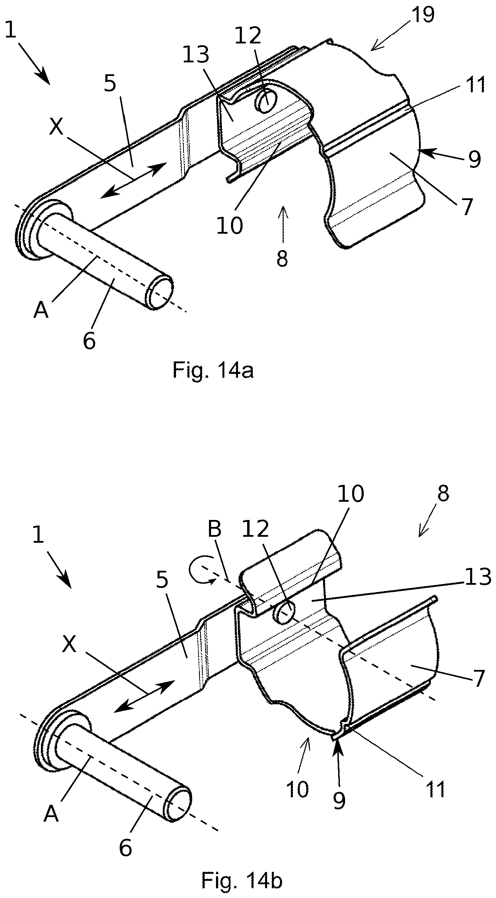

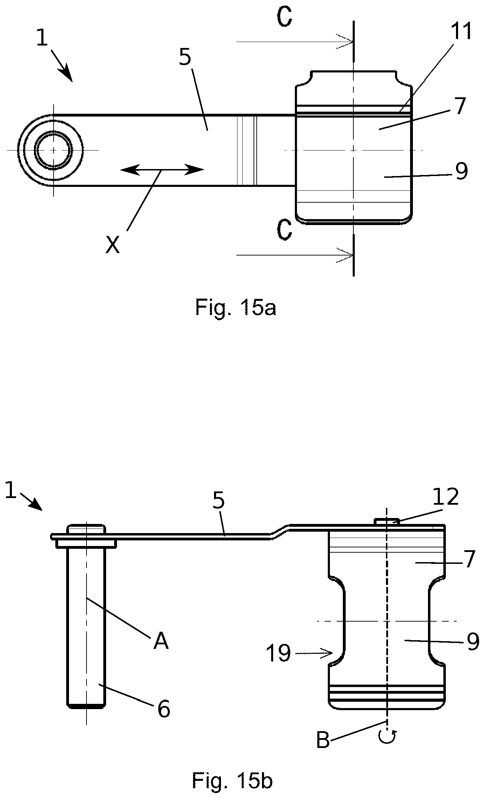

Die Fig. 14a bis 16b zeigen eine weitere bevorzugte Ausführungsform des Verriegelungselements 1. Die Fig. 14a bis 16b zeigen jeweils die gleichen Ansichten des Verriegelungselements 1 wie die entsprechenden Fig. 8a bis 10b. Die in den Fig. 14a bis 16b gezeigte Ausführungsform funktioniert weitgehend gleich der oben im Zusammenhang mit den Fig. 8a bis 10b beschriebenen Ausführungsform. Zur Vermeidung von Wiederholungen werden daher funktionell gleiche Teile mit gleichen Bezugsziffern bezeichnet und es wird diesbezüglich auf die obige Beschreibung verwiesen.

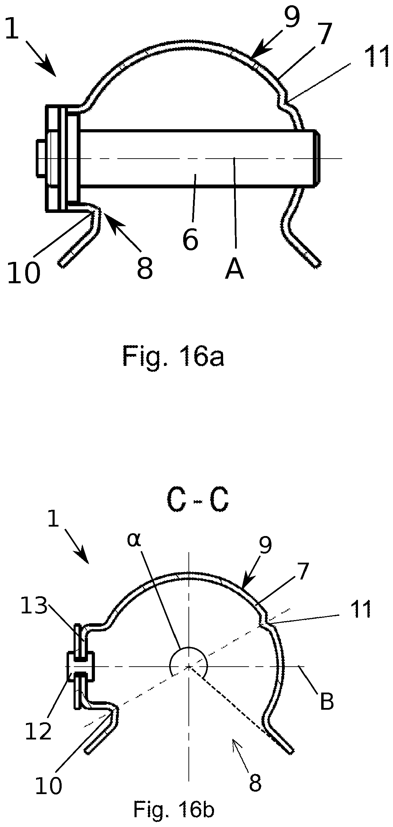

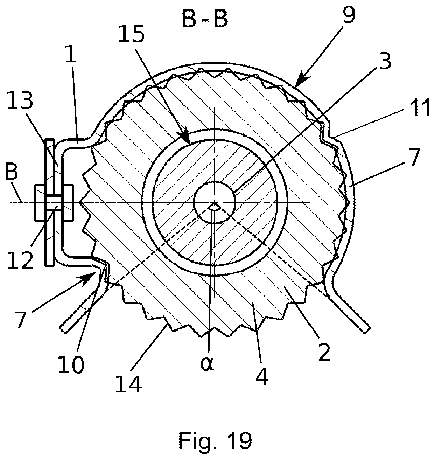

Diese Ausführungsform unterscheidet sich nur darin von der in den Fig. 8a bis 10b gezeigten Ausführungsform, dass die Rasteinrichtung 8 eine zweite Rastnase 11 aufweist und dass der Teilring 9 einen verengten Bereich 19 aufweist. Die zweite Rastnase 11 ist auf dem Teilring 9 vorgesehen und liegt der ersten Rastnase 10 bezogen auf einen Mittelpunkt der zu haltenden Zug-Druckstange 2 gegenüber (vgl. Fig. 16b und 19) und greift somit im montierten Zustand um im Wesentlichen 180° versetzt in den Zahnkranz 14 ein. Damit wird die Stabilität der Verrastung verbessert. Im verengten Bereich 19 weist der Teilring 9 eine Schmalstelle, d.h. eine verringerte Breite, auf.

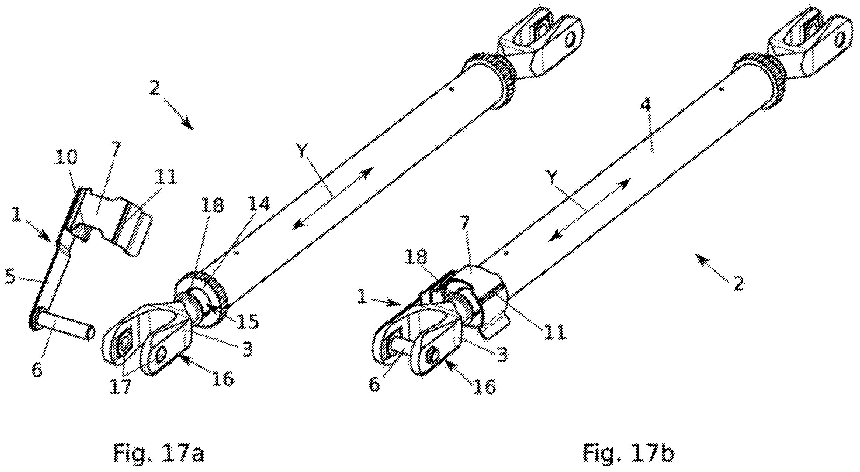

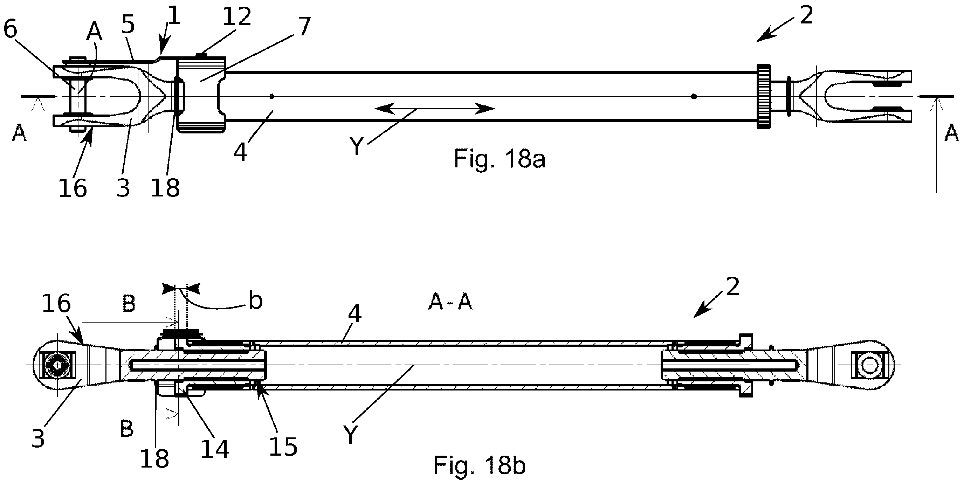

Die Fig. 17a bis 19 zeigen eine weitere bevorzugte Ausführungsform der Zug-Druck-Stange 2. Die Fig. 17a bis 19 zeigen jeweils die gleichen Ansichten des Verriegelungselements 1 wie die entsprechenden Fig. 11a bis 13. Die in den Fig. 17a bis 19 gezeigte Ausführungsform funktioniert weitgehend gleich der oben im Zusammenhang mit den Fig. 11a bis 13 beschriebenen Ausführungsform. Zur Vermeidung von Wiederholungen werden daher funktionell gleiche Teile mit gleichen Bezugsziffern bezeichnet und es wird diesbezüglich auf die obige Beschreibung verwiesen. Die Ausführungsform der Fig. 17a bis 19 unterscheidet sich nur darin von jener der Fig. 11a bis 13, dass das Verriegelungselement 1 gemäß der Ausführungsform der Fig. 14a bis 16b ausgeführt ist.

## Patentansprüche

1. Verriegelungselement (1) zur lösbaren Verriegelung eines Adapters (3) relativ zu einem Körper (4) einer Zug-Druck-Stange (2), mit einem Hebelarm (5) und einem mit dem Hebelarm (5) verbunden Bolzen (6), einem Schnappelement (7) und einer Rasteinrichtung (8), **dadurch gekennzeichnet, dass** das Schnappelement (7) mit dem Hebelarm (5) drehbar verbunden ist, wobei das Schnappelement (7) drehbar um eine zum Bolzen (6) parallele Drehachse (B) mit dem Hebelarm (5) verbunden ist.

2. Verriegelungselement (1) nach Anspruch 1, **dadurch gekennzeichnet, dass** das Schnappelement (7) einen Teilring (9) aufweist, welcher in der verriegelten Stellung zur Anordnung auf dem Adapter (3) und/oder dem Körper (4) der Zug-Druck-Stange (2) ausgebildet ist.

3. Verriegelungselement (1) nach einem der Ansprüche 1 oder 2, **dadurch gekennzeichnet, dass** das Schnappelement (7) mit dem Hebelarm (5) derart drehbar verbunden ist, dass das Schnappelement (7) zumindest eine erste und eine zweite Drehstellung einnehmen kann, wobei eine Schnappöffnung des Schnappelements (7) in der ersten Drehstellung zumindest in eine Richtung normal zur Längserstreckung (A) des Bolzens (6) und normal zur Längserstreckung (X) des Hebelarms (5) zeigt und die zweite Drehstellung um 180° gedreht zur ersten Drehstellung orientiert ist.

4. Verriegelungselement (1) nach einem der Ansprüche 1 bis 3, **dadurch gekennzeichnet, dass** die Rasteinrichtung (8) vom Schnappelement (7) in Längserstreckungsrichtung (X) des Hebelarms (5) beabstandet ist.

5. Verriegelungselement (1) nach einem der Ansprüche 1 bis 4, **dadurch gekennzeichnet, dass** das Schnappelement (7) und die Rasteinrichtung (8) bezogen auf eine zu umfassende Zug-Druck-Stange (2) gemeinsam einen Winkelbereich (α) von mehr als 180° umfassen.

6. Verriegelungselement (1) nach einem der Ansprüche 1 bis 5, **dadurch gekennzeichnet, dass** die Rasteinrichtung (8) zumindest eine Rastnase (10, 11) aufweist.

7. Verriegelungselement (1) nach einem der Ansprüche 1 bis 6, **dadurch gekennzeichnet, dass** die Rasteinrichtung (8) zwei Rastnasen (10, 11) aufweist.

8. Verriegelungselement (1) nach einem der Ansprüche 1 bis 7, **dadurch gekennzeichnet, dass** das Schnappelement (7) über ein Drehgelenk (12) mit dem Hebelarm (5) verbunden ist.

9. Verriegelungselement (1) nach einem der Ansprüche 1 bis 8, **dadurch gekennzeichnet, dass** das Schnappelement (7) eine Platte (13) aufweist, die auf dem Hebelarm (5) aufliegt.

10. Zug-Druck-Stange (2) mit einem Adapter (3) und einem Körper (4), **gekennzeichnet durch** ein Verriegelungselement (1) nach einem der Ansprüche 1 bis 9.

11. Zug-Druck-Stange (2) nach Anspruch 10, **dadurch gekennzeichnet, dass** das Schnappelement (7) in einer Vorbereitungsstellung um eine Drehachse (B) drehbar ist, die normal zur Längserstreckungsrichtung (Y) der Zug-Druck-Stange (2) im montierten Zustand des Verriegelungselements (1) ist.

12. Zug-Druck-Stange (2) nach einem der Ansprüche 10 bis 11, **dadurch gekennzeichnet, dass** der Körper (4) einen Zahnkranz (14) aufweist, in welchen die zumindest eine Rastnase (10, 11) der Rasteinrichtung (8) eingreifbar ausgebildet ist, wobei vorzugsweise die Rasteinrichtung (8) in Längserstreckungsrichtung (Y) der Zug-Druck-Stange (2) länger ausgebildet ist als die Breite (b) des Zahnkranzes (14).

13. Zug-Druck-Stange (2) nach einem der Ansprüche 10 bis 12, **dadurch gekennzeichnet, dass** das Schnappelement (7) im montierten Zustand des Verriegelungselements (1) den Adapter (3) teilweise umfasst.

14. Zug-Druck-Stange (2) nach einem der Ansprüche 10 bis 13, **dadurch gekennzeichnet, dass** der Adapter (3) eine zylinderförmige Mantelfläche aufweist, deren Längserstreckung in Längserstreckungsrichtung (Y) der Zug-Druck-Stange (2) zumindest der Längserstreckung des Schnappelements (7) entspricht.

15. Zug-Druck-Stange (2) nach einem der Ansprüche 10 bis 14, **dadurch gekennzeichnet, dass** das Schnappelement (7) Federstahl aufweist.

## Claims

1. A locking element (1) for releasably locking an adapter (3) relative to a body (4) of a push-pull rod (2), comprising a lever arm (5) and a pin (6) connected to the lever arm (5), a snap-action element (7) and a latching device (8), **characterised in that** the snap-action element (7) is rotatably connected to the lever arm (5), wherein the snap-action element (7) is rotatably connected to the lever arm (5) about an axis of rotation (B) parallel to the pin (6).

2. The locking element (1) according to claim 1, **characterised in that** the snap-action element (7) comprises a partial ring (9) which, in the locked position, is designed for arrangement on the adapter (3) and/or the body (4) of the push-pull rod (2).

3. The locking element (1) according to either claim 1 or claim 2, **characterised in that** the snap-action element (7) is rotatably connected to the lever arm (5) in such a way that the snap-action element (7) can assume at least a first and a second rotational position, wherein a snap opening of the snap-action element (7) in the first rotational position points at least in a direction normal to the longitudinal extension (A) of the pin (6) and normal to the longitudinal extension (X) of the lever arm (5) and the second rotational position is oriented rotated by 180° to the first rotational position.

4. The locking element (1) according to any one of claims 1 to 3, **characterised in that** the latching device (8) is spaced apart from the snap-action element (7) in the longitudinal extension direction (X) of the lever arm (5).

5. The locking element (1) according to any one of claims 1 to 4, **characterised in that** the snap-action element (7) and the latching device (8) together encompass an angle range (a) of more than 180°, relative to a push-pull rod (2) to be embraced.

6. The locking element (1) according to any one of claims 1 to 5, **characterised in that** the latching device (8) comprises at least one latching nose (10, 11).

7. The locking element (1) according to any one of claims 1 to 6, **characterised in that** the latching device (8) comprises two latching noses (10, 11).

8. The locking element (1) according to any one of claims 1 to 7, **characterised in that** the snap-action element (7) is connected to the lever arm (5) by a swivel joint (12).

9. The locking element (1) according to any one of claims 1 to 8, **characterised in that** the snap-action element (7) comprises a plate (13) which rests on the lever arm (5).

10. A push-pull rod (2) comprising an adapter (3) and a body (4), **characterised by** a locking element (1) according to any one of claims 1 to 9.

11. The push-pull rod (2) according to claim 10, **characterised in that**, in a preparatory position, the snap-action element (7) can be rotated about an axis of rotation (B) which is normal to the longitudinal extension direction (Y) of the push-pull rod (2) in the assembled state of the locking element (1).

12. The push-pull rod (2) according to either claim 10 or claim 11, **characterised in that** the body (4) comprises a sprocket (14) into which the at least one latching nose (10, 11) of the latching device (8) is designed to be engageable, wherein preferably the latching device (8) is designed to be longer in the longitudinal extension direction (Y) of the push-pull rod (2) than the width (b) of the sprocket (14).

13. The push-pull rod (2) according to any one of claims 10 to 12, **characterised in that** the snap-action element (7), in the assembled state of the locking element (1), partially encompasses the adapter (3).

14. The push-pull rod (2) according to any one of claims 10 to 13, **characterised in that** the adapter (3) comprises a cylindrical lateral surface, the longitudinal extension of which in the longitudinal extension direction (Y) of the push-pull rod (2) corresponds at least to the longitudinal extension of the snap-action element (7).

15. The push-pull rod (2) according to any one of claims 10 to 14, **characterised in that** the snap-action element (7) is made of spring steel.

## Revendications

1. Elément de verrouillage (1) pour le verrouillage réversible d'un adaptateur (3) par rapport à un corps (4) d'une barre de traction-compression (2), avec un bras de levier (5) et une tige (6) reliée au bras de levier (5), un élément d'encliquetage (7) et un dispositif d'enclenchement (8), **caractérisé en ce que** l'élément d'encliquetage (7) est relié de manière à pouvoir tourner au bras de levier (5), où l'élément d'encliquetage (7) est relié au bras de levier (5) de manière à pouvoir tourner autour d'un axe de rotation (B) parallèle à la tige (6).

2. Elément de verrouillage (1) selon la revendication 1, **caractérisé en ce que** l'élément d'encliquetage (7) comporte un anneau partiel (9) qui est conçu dans la position verrouillée pour le montage sur l'adaptateur (3) et/ou le corps (4) de la barre de traction-compression (2).

3. Elément de verrouillage (1) selon l'une des revendications 1 ou 2, **caractérisé en ce que** l'élément d'encliquetage (7) est relié au bras de levier (5) de manière à pouvoir tourner de telle sorte que l'élément d'encliquetage (7) peut occuper au moins une première et une deuxième position de rotation, où une ouverture d'encliquetage de l'élément d'encliquetage (7) est tournée dans la première position de rotation au moins dans une direction perpendiculaire à l'extension longitudinale (A) de la tige (6) et perpendiculaire à l'extension longitudinale (X) du bras de levier (5) et la deuxième position de rotation est orientée tournée de 180° par rapport à la première position de rotation.

4. Elément de verrouillage (1) selon l'une des revendications 1 à 3, **caractérisé en ce que** le dispositif d'enclenchement (8) est distant de l'élément d'encliquetage (7) dans la direction d'extension longitudinale (X) du bras de levier (5).

5. Elément de verrouillage (1) selon l'une des revendications 1 à 4, **caractérisé en ce que** l'élément d'encliquetage (7) et le dispositif d'enclenchement (8) incluent ensemble un domaine angulaire (a) de plus de 180° par rapport à une barre de traction-compression (2) à inclure.

6. Elément de verrouillage (1) selon l'une des revendications 1 à 5, **caractérisé en ce que** le dispositif d'enclenchement (8) comporte au moins un ergot d'enclenchement (10, 11).

7. Elément de verrouillage (1) selon l'une des revendications 1 à 6, **caractérisé en ce que** le dispositif d'enclenchement (8) comporte deux ergots d'enclenchement (10, 11).

8. Elément de verrouillage (1) selon l'une des revendications 1 à 7, **caractérisé en ce que** l'élément d'encliquetage (7) est relié au bras de levier (5) par l'intermédiaire d'une articulation à charnière (12).

9. Elément de verrouillage (1) selon l'une des revendications 1 à 8, **caractérisé en ce que** l'élément d'encliquetage (7) comporte une plaque (13) qui repose sur le bras de levier (5).

10. Barre de traction-compression (2) avec un adaptateur (3) et un corps (4), **caractérisée par** un élément de verrouillage (1) selon l'une des revendications 1 à 9.

11. Barre de traction-compression (2) selon la revendication 10, **caractérisée en ce que** l'élément d'encliquetage (7) peut tourner dans une position de préparation autour d'un axe de rotation (B) qui est perpendiculaire à la direction d'extension longitudinale (Y) de la barre de traction-compression (2) dans l'état monté de l'élément de verrouillage (1).

12. Barre de traction-compression (2) selon l'une des revendications 10 à 11, **caractérisée en ce que** le corps (4) comporte une couronne dentée (14) dans laquelle le au moins un ergot d'enclenchement (10, 11) du dispositif d'enclenchement (8) est conçu pour pouvoir pénétrer, où de préférence le dispositif d'enclenchement (8) dans la direction d'extension longitudinale (Y) de la barre de traction-compression (2) est conçu plus long que la largeur (b) de la couronne dentée (14).

13. Barre de traction-compression (2) selon l'une des revendications 10 à 12, **caractérisée en ce que** l'élément d'encliquetage (7) dans l'état monté de l'élément de verrouillage (1) inclut partiellement l'adaptateur (3).

14. Barre de traction-compression (2) selon l'une des revendications 10 à 13, **caractérisée en ce que** l'adaptateur (3) comporte une surface latérale de forme cylindrique dont l'extension longitudinale dans la direction d'extension longitudinale (Y) de la barre de traction-compression (2) correspond au moins à l'extension longitudinale de l'élément d'encliquetage (7).

15. Barre de traction-compression (2) selon l'une des revendications 10 à 14, **caractérisée en ce que** l'élément d'encliquetage (7) comporte de l'acier à ressort.
